# EUROPEAN PATENT APPLICATION

(11) **EP 4 768 107 A1**
(43) Date of publication of application: **01.07.2026**
(21) Application number: 25226781.0
(22) Date of filing: 23.12.2025
(51) Int. Cl.: A63F 13/52, A63F 13/42, A63F 13/55, A63F 13/825

(54) **GAME APPARATUS AND PROGRAM**

(30) Priority: 27.12.2024 JP 2024233090
(71) Applicant: Bandai Co., Ltd., Tokyo 111-8081 (JP)
(72) Inventor: OSHIKIRI, Chisato, Tokyo 111-8081 (JP); OKAMOTO, Yuri, Tokyo 111-8081 (JP); YASHIKI, Atsushi, Tokyo 111-8081 (JP); HATAYAMA, Hirotaka, Tokyo 111-8081 (JP); SAKAMOTO, Daisuke, Tokyo 111-8081 (JP)
(74) Representative: Studio Torta S.p.A.

(57) **Abstract**

A game apparatus that executes a game in which a character appears, includes: an execution unit that executes the game; a display control unit that causes a display unit to display the character; and an operation input unit that receives an operation input for the game. The operation input unit is capable of receiving at least a first operation input related to switching of a display mode of a display element related to the character and a second operation input related to selection of a game element acting on the character, and on condition that the first operation input is received, the display control unit switches and displays a display mode of the display element, and the execution unit changes a type of the game element selectable by the second operation input.

## Description

### BACKGROUND OF THE INVENTION

### 1. TECHNICAL FIELD

The present invention relates to a game apparatus and a program, and relates to an electronic game that progresses on the basis of an operation input.

### 2. DESCRIPTION OF THE RELATED ART

There is a game apparatus capable of executing a raising game for raising a character while providing an input opportunity of a necessary operation input (JP 2016-013157 A).

### SUMMARY OF THE INVENTION

Incidentally, by improving an arithmetic performance of an arithmetic apparatus, it is possible to selectively provide various types of functions as a game element acting on a character in an electronic game executed in a game apparatus. On the other hand, in a case where an operation input unit is limited as in the game apparatus described in JP 2016-013157 A, an operation input that needs to be performed before a user uses a desired function can be complicated. For example, it is necessary to frequently operate the operation input to an operation member before selecting the desired function from a list of all functions.

An object of the present invention is to provide a game apparatus and a program with improved convenience.

One aspect of the present invention is a game apparatus that executes a game in which a character appears, including: an execution unit that executes the game; a display control unit that causes a display unit to display the character; and an operation input unit that receives an operation input for the game. The operation input unit is capable of receiving at least a first operation input related to switching of a display mode of a display element related to the character and a second operation input related to selection of a game element acting on the character, and on condition that the first operation input is received, the display control unit switches and displays a display mode of the display element, and the execution unit changes a type of the game element selectable by the second operation input.

According to the present invention, convenience can be improved.

### BRIEF DESCRIPTION OF THE DRAWINGS

FIG. 1 is a diagram illustrating an external configuration of a game apparatus 100 according to embodiments and modifications of the present invention;
   FIG. 2 is a block diagram illustrating a hardware configuration of the game apparatus 100 according to the embodiments and the modifications of the present invention;
   FIGS. 3A to 3D are diagrams for explaining various display modes switchable in a raising game according to the embodiments and the modifications of the present invention;
   FIGS. 4A and 4B are diagrams for explaining a preliminary effect displayed according to switching of the display mode in the raising game according to the embodiments and the modifications of the present invention;
   FIGS. 5A and 5B are diagrams for explaining a switching effect displayed according to switching of the display mode in the raising game according to the embodiments and the modifications of the present invention;
   FIG. 6 is a diagram illustrating a mode display related to the raising game according to the embodiments and the modifications of the present invention;
   FIG. 7 is a diagram illustrating a state display related to the raising game according to the embodiments and the modifications of the present invention;
   FIG. 8 is a flowchart illustrating switching processing executed in the game apparatus 100 according to the embodiments and the modifications of the present invention; and
   FIG. 9 is a diagram for explaining a configuration example of data to be referred to in the game apparatus 100 according to the embodiments and the modifications of the present invention.

### DETAILED DESCRIPTION

### [EMBODIMENT]

Hereinafter, embodiments will be described in detail with reference to the accompanying drawings. Note that the following embodiments do not limit the invention according to the claims, and all combinations of features described in the embodiments are not necessarily essential to the invention. Two or more features of a plurality of features described in the embodiments may be freely combined. Furthermore, the same or similar components are denoted by the same reference signs, and redundant description will be omitted.

In an embodiment described below, an example in which the present invention is applied to a game apparatus capable of executing a game for raising (growing) a character (hereinafter, the game is referred to as a raising game) as an example of the game apparatus will be described. However, the present invention is applicable to any device capable of executing an electronic game including an entertainment element for acquiring a game element. That is, it goes without saying that the electronic game to which the present invention is applied is not limited to a game of a specific genre such as the raising game.

### <<Configuration of Game Apparatus>>

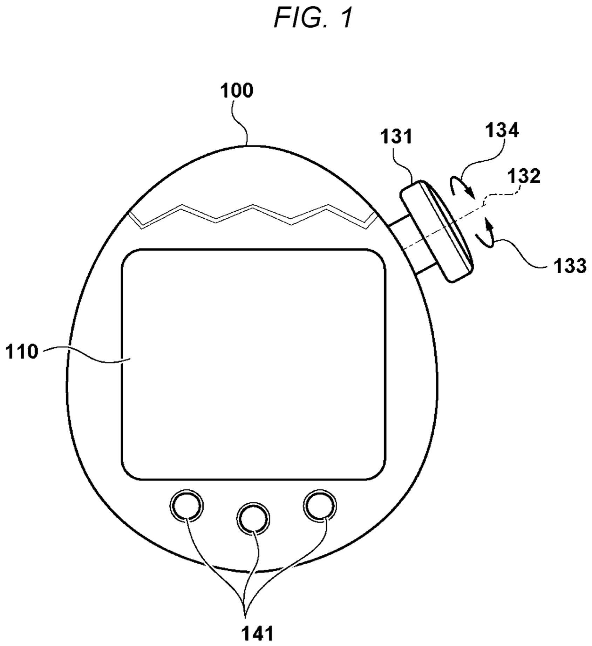

FIG. 1 illustrates an external configuration of a game apparatus 100 according to the present embodiment. In the present embodiment, the game apparatus 100 is formed as a portable toy, and operates using power supplied from a battery or dry battery (not illustrated). In an aspect where the game apparatus 100 operates on a battery, the game apparatus 100 includes a terminal (not illustrated) connectable to a power source, and is able to charge the battery by electrically connecting a commercial power source or the like to the terminal via a power supply cable.

### <Hardware Configuration of Game Apparatus>

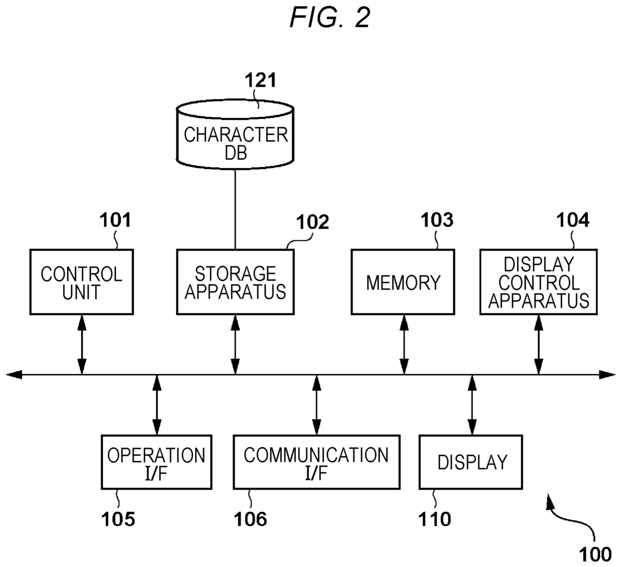

Next, a hardware configuration of the game apparatus 100 will be described with reference to FIG. 2. FIG. 2 is a block diagram illustrating a hardware configuration of the game apparatus 100.

A control unit 101 is a processor such as a central processing unit (CPU), and performs various types of control including operation control of each piece of hardware included in the game apparatus 100. Specifically, for example, the control unit 101 reads a necessary program stored in a storage apparatus 102, loads the program in a memory 103, and executes the program to perform corresponding control. Furthermore, the control unit 101 includes a built-in clock and is able to acquire the current time.

The storage apparatus 102 is an apparatus capable of storing permanent information, such as a nonvolatile memory. In addition to a program related to the operation of the game apparatus 100 and a program of a raising game executed in the game apparatus 100, the storage apparatus 102 stores information of parameters necessary for implementing various types of control. Furthermore, the storage apparatus 102 also functions as a database of various types of data related to the raising game (character DB 121 and friend character DB 122). The memory 103 is a storage apparatus used for temporary data storage, such as a volatile memory. The memory 103 may be used not only as a loading area of each program but also as a storage area for temporarily storing data or the like output in the course of operation of various types of hardware or various types of control.

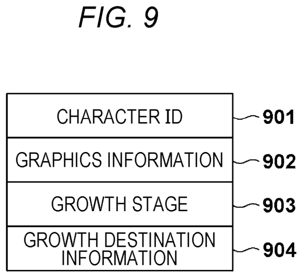

The character DB 121 is a database that manages information regarding characters that can be raised in the raising game (character information) as a record. In the raising game executed in the game apparatus 100 according to the present embodiment, a user can raise a character that grows through a plurality of growth stages. The character has a different appearance each time the growth stage changes. The character DB 121 manages various types of information as a record for each appearance that can be taken by a character at each growth stage. For example, as illustrated in FIG. 9, character information related to one record includes, in association with a character ID 901 that uniquely identifies (the appearance of) a character, graphics information 902 for drawing the appearance of the character, a growth stage 903 indicating a growth stage in which the character has the appearance, and growth destination information 904 indicating an appearance into which the character can grow from the appearance. The growth destination information 904 may store information of the corresponding character ID 901.

A display control apparatus 104 performs display control such that various screens related to the raising game are displayed on a display 110. In the present embodiment, the display control apparatus 104 includes, for example, a drawing apparatus such as a graphics chip or a graphics processing unit (GPU), and also executes drawing processing of generating various screens related to the raising game. The display control apparatus 104 includes a drawing memory (not illustrated), loads various types of graphics data read from the storage apparatus 102, and performs predetermined calculation to generate various images (screens) related to the raising game. The screen and the image generated by the display control apparatus 104 are presented to the user by being displayed on, for example, the display 110 included in the game apparatus 100. The display 110 is an apparatus that is included in the game apparatus 100 and displays information, such as a liquid crystal display.

A communication I/F 106 is an interface included in the game apparatus 100 for communication with an external apparatus. As described above, the game apparatus 100 of the present embodiment includes a connection terminal (not illustrated), and is configured to be able to perform information communication with another game apparatus 100 by connecting the connection terminals to each other.

An operation I/F 105 is a user interface that is included in the game apparatus 100 and receives an operation input. In a case where it is detected that an operation input has been made, the operation I/F 105 outputs a control signal corresponding to the operation input to the control unit 101. In an aspect in which the display 110 is able to detect a touch input, the operation I/F 105 may include a touch input detection sensor included in the display 110. In addition, the operation I/F 105 may include, for example, various operation members provided on the exterior of the game apparatus 100.

### (Operation member)

Here, various operation members included in the game apparatus 100 according to the present embodiment will be described in more detail with reference to FIG. 1.

The operation member included in the game apparatus 100 includes a dial type operation member (hereinafter, simply referred to as a dial) 131. The dial 131 is provided along a shaft 132 extending in a radiation direction of the game apparatus 100 from the side of the display 110 of the game apparatus 100, and includes a rotation mechanism rotatable around the shaft 132. The user can perform an operation input to the dial 131 by rotating the rotation mechanism.

The dial 131 is configured such that, in a period in which an operation input continues after the operation input is first detected, an input amount increases or decreases according to an operation amount thereof. More specifically, during a period in which the operation input continues, the operation I/F 105 accumulates the operation input made via the dial 131 as a series of operation inputs, and treats the accumulated operation input as an input amount. That is, the operation I/F 105 can output the input amount for a series of operation inputs by accumulating, in a period in which the dial 131 is being operated, differences in the state of the dial 131 detected moment by moment. The input amount is configured such that, as the rotation amount of the rotation mechanism of the dial 131 increases, the absolute amount thereof increases, for example. Hereinafter, the input amount related to the operation input that increases or decreases according to the operation input to the dial 131 will be referred to as an "accumulation amount".

In an aspect in which the rotation mechanism of the dial 131 is configured to be rotatable, the operation I/F 105 may be configured to start detection of the accumulation amount when the rotation mechanism is rotated from a non-operation state, for example, and intermittently output, as the accumulation amount, the rotation amount of the rotation mechanism generated in a predetermined period. In addition, in an aspect in which the rotation mechanism of the dial 131 is constantly biased to a fixed rotation angle (initial rotation angle) in a release state (non-operation state), the operation I/F 105 may be configured to be capable of intermittently outputting, as the accumulation amount, the rotation amount of the rotation mechanism from the initial rotation angle. In this aspect, the rotation mechanism is provided with a biasing mechanism (a turning spring or the like) that biases the rotation mechanism to the initial rotation angle.

The rotation mechanism of the dial 131 is rotatable in a clockwise direction 133 and a counterclockwise direction 134 around the shaft 132, and the operation I/F 105 detects rotation in each direction as a different operation input. That is, regarding the operation input made to the dial 131, the operation I/F 105 can output information indicating whether the operation input is in the clockwise direction 133 or the counterclockwise direction 134, and information regarding the accumulation amount.

The operation member included in the game apparatus 100 includes a button type operation member (hereinafter, simply referred to as a button)141. In the example of FIG. 1, three types of buttons 141 are provided in the lower portion of the display 110 on the surface of the game apparatus 100 on which the display 110 is disposed. In one aspect, in the three types of buttons 141, the buttons other than the button arranged at the center are used as operation members for changing a selected state of a display item, and the button arranged at the center is used as an operation member for deciding execution of a function corresponding to the display item in the selected state.

In the raising game executed in the game apparatus 100 of the present embodiment, the dial 131 and the button 141 are configured to be mainly used for different purposes. More specifically, the dial 131 is mainly used to receive an operation input for switching a display mode of a display element displayed in association with a character to be raised (hereinafter, referred to as a raising character) in the raising game. Here, the display element refers to various graphics constituting a screen displayed on the display 110 related to the raising game. Although details of the display mode will be described later, in one aspect, the display element may include graphics indicating the appearance of the raising character. Hereinafter, the display element displayed in association with the raising character may be simply referred to as a "screen". On the other hand, the button 141 is mainly used to decide the execution of various functions (game elements (mainly care for the raising character)) that are necessary for the progress of the raising game and produce the effect acting on the raising character. That is, the dial 131 and the button 141 differ in their roles in the raising game in that the former is mainly used to switch the display mode of the screen, whereas the latter is mainly used to decide execution of a function acting on the raising character. Note that the dial 131 may be used to change the display item in the selected state according to function selection.

Hereinafter, the operation input made to the dial 131 may be referred to as a "dial operation", and an operation input made to the button may be referred to as a "button operation".

### <<Outline of Game>>

Hereinafter, an outline of a game in which a play experience is provided in the game apparatus 100 according to the present embodiment will be described. In the present embodiment, the game will be described as a raising game that provides a raising element of a raising character, a communication element between a user and a raising character, and an interaction element between characters as entertainment elements. However, the raising game is merely one aspect of a game in which a character appears, and implementation of the present invention is not limited thereto. The present invention is applicable to any game in which a character whose motion is controlled in accordance with an operation input performed by a user appears. Here, the motion control is not limited to a case where the user directly acts on a character, and includes a case where, in response to a change in a parameter or an environment as a result of evaluation of an operation input performed by the user, the operation input indirectly acts on an action or a motion of the character.

In the raising game, the user can raise a character by performing an operation input related to care for the character. The raising game starts from hatching of an egg, for example, and presents that a growth stage progresses by necessary operation inputs related to care being sequentially performed and the character grows while changing the appearance. The growth stage is a concept indicating, for example, each of a plurality of stages into which a growth process (period) of the raising character in the raising game is divided (an egg stage (before birth), a baby stage (infant period), a kids stage (childhood period), a young stage (adolescence period), a friend stage (adulthood period), and the like), and progresses when conditions such as an elapsed growth time are satisfied.

Here, the character in each growth stage has an appearance determined in advance for the growth stage. In other words, in the raising game of the present embodiment, the appearance that can be taken by the character in each growth stage is determined in advance, and for example, it is decided which appearance the character is grown into according to the selected egg or the state of care in the growth stage so far. As described above, the appearance of the character is determined as the graphics information 902 in the character information registered in the character DB 121.

### <<Outline of Switching of Display Mode>>

As described above, the raising game of the present embodiment is provided with various functions for the progress of the game. On the other hand, an aspect in which, in order to use a specific function, the user is caused to search for and select the function from a function list in which all functions are arranged is troublesome since the user is forced to perform a complicated operation input particularly in a case where a wide variety of functions are provided. In particular, in a device having only a limited type of operation member or a device having a limited number of pixels in the display area as in the game apparatus of the present embodiment, the user may need to operate the operation member many times until using a desired function. Such an operation method related to the use of the function has low affinity with the content of the game content and is difficult to be intuitively understood, and thus the user needs to become accustomed to the operation method until mastering the operation method.

Therefore, the raising game of the present embodiment is configured such that a plurality of types of display modes are provided for the screen related to the raising character, and the types of available functions are different for each display mode. The function available in each display mode is configured to be related to the content shown as a screen in the display mode as described later. In this way, the user can intuitively understand which display mode is to be used in order to use the desired function, switch the screen to the display mode highly related to the function, and easily select the desired function from a smaller set of functions.

In the game apparatus 100 according to the present embodiment, the display mode can be switched by a dial operation as described above. The raising game has a plurality of types of display modes, and by performing a dial operation, the user can play the raising game on a screen of a display mode different from the display mode currently displayed.

Each display mode is configured to include graphics of at least one of the raising character or an environment in the raising game in which the raising character is arranged. Each of the display modes is associated with a concept of a display scale related to the raising game as described later, and screens related to the raising character are illustrated in different scale modes. That is, the dial operation corresponds to a screen scaling operation, and by performing an operation input to the dial 131, the user can switch the screen to a display mode of a different scale mode to play the raising game. As described above, the dial 131 is configured to be able to detect two types of operation inputs respectively corresponding to the clockwise direction 133 and the counterclockwise direction 134, and accepts an enlargement instruction to display the display element in a more enlarged manner by a rotation operation in the former direction and a reduction instruction to display the display element in a more reduced manner by a rotation operation in the latter direction. Therefore, for example, in a case where an operation input to rotate the dial 131 in the clockwise direction 133 is made, the screen displayed on the display 110 is switched to a display mode corresponding to a display scale enlarged by one step from the current display mode. In addition, for example, in a case where an operation input to rotate the dial 131 in the counterclockwise direction 134 is performed, the screen displayed on the display 110 is switched to a display mode corresponding to a display scale reduced by one step from the current display mode. Hereinafter, the raising game of the present embodiment will be described assuming that four types of display modes associated with different scale modes are provided.

Note that the switching of the display mode is configured not to change the state of the raising character in the raising game, but to change the scale mode of the screen related to the raising character while maintaining the state. That is, the function related to the switching of the display mode is a function that enables the user to switch the mode of displaying the raising character and the environment in which the raising character is arranged, without changing the environment and a health state in which the raising character is arranged. In other words, the function enables the user to observe the raising character from various viewpoints, and enables hints to be provided in various modes, allowing the user to derive necessary care for the raising character.

### <Each Display Mode and Available Function>

Hereinafter, four types of display modes provided to be switchable in the raising game of the present embodiment will be specifically described with reference to the drawings. As described above, the four types of display modes provide screens related to the raising character in different scale modes, and hereinafter, the display modes will be described in order from one having a smaller display scale (a smaller scale mode) of the raising character on the screen.

### (Wide-Area Display)

The first display mode is "wide-area display".

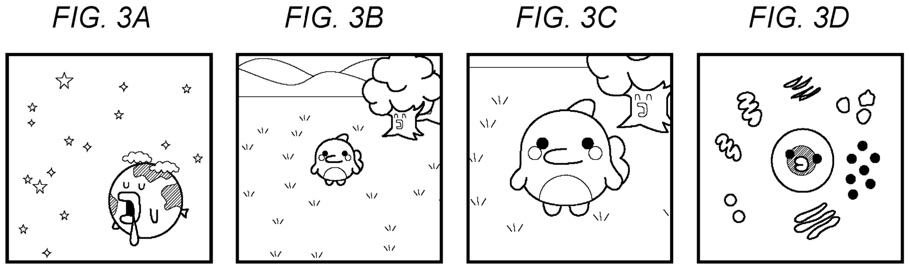

The wide-area display does not include graphics indicating the appearance of the raising character, and is a display mode in which the environment in which the character is arranged is positioned from a macro viewpoint. In the raising game of the present embodiment, the environment in which the raising character is raised is assumed to be one planet provided uniquely for the game apparatus, and the appearance of the planet is displayed in the wide-area display. As illustrated in FIG. 3A, in the wide-area display, a screen is configured in a manner that provides an overhead view of a planet, which is a field in which the raising character is arranged, in an outer space.

In the raising game, as an interaction element with another user, a communication function such as interaction between raising characters and exchange of items with another game apparatus 100 can be used. The communication function is performed in a manner in which the raising character visits from the planet related to one game apparatus 100 to the planet related to another game apparatus 100. Therefore, the functions available in the wide-area display include functions related to communication with another game apparatus 100. In one aspect, the function is provided as a "ride in a spacecraft" function utilizing inter-planet transportation.

In addition, since the planet is provided uniquely for the gaming apparatus and is a user-specific display element that can be presented to other users as well, a "decorate a planet" function by which the user changes the appearance of the planet is also provided to be available in a wide-area display. In the function, for example, an accessory obtained by the progress of the raising game, an accessory obtained using the communication function, or the like can be attached to the planet to exhibit a unique appearance.

In addition, stars are scattered in the outer space extending outside the planet, and some of the stars form a constellation. Regarding this, the functions available in the wide-area display include a "watch stars" function. The constellation may be configured, for example, in a manner that depicts a character that satisfies a predetermined condition among characters raised by the user in the past. In this way, it is possible to provide an entertainment element that allows the user to reminisce about characters raised in the past.

### (Field Display)

The second display mode is "field display".

The field display is a display mode that provides a viewpoint focused on a partial area (field) distributed in the planet. The field display is basically a display mode for allowing the user to observe the ecology of the character in the planet including the raising character, and includes graphics indicating the appearance of the character unlike the wide-area display as illustrated in FIG. 3B. In the raising game of the present embodiment, another character other than the raising character may be displayed in the field, and it is also possible to present that the characters interact with each other in the field display. The other character can include a character raised by the user in the past and left alone (returned to the wild) (hereinafter, referred to as a wild character).

As described above, the field display provides a screen related to the living environment surrounding the raising character, the functions available in the field display include a "cleaning" function for arranging the living environment.

In addition, various facilities are arranged in the field as an element for adding liveliness. The facility is provided as a gimmick used by a character, for example, and provides an entertainment element related to the ecological observation of the character, for example, such that the character exhibits a dedicated motion when the facility is used. Therefore, the functions available in the field display also include a "focus" function for focusing on a specific facility in the field and observing the field.

Although details will be described later, the area distributed in the planet is not limited to one mode, and in the field display, a "field movement" function of moving the raising character to a different area is also provided to be available. In addition, an "independence" function of allowing the raising character to stand on its own is also provided to be available in the field display.

### (Character Display)

The third display mode is "character display".

The character display is a display mode specialized for display of the raising character rather than the field display, and provides a screen in a manner in which graphics of the raising character and the background in the field display are enlarged. In the character display, as illustrated in FIG. 3C, another wild character on the field is not displayed, and graphics indicating the appearance of the raising character are mainly displayed. In the raising game of the present embodiment, the character display is in a display mode in which various functions for performing care that directly acts on the raising character in the raising game are available.

Such functions can include a "meal/snack" function for giving a meal or a snack to the raising character, a "tool" function of providing an item to the raising character, and a "grooming" function of caring for the appearance of the raising character such as brushing and brushing teeth. In addition, the functions available in the character display include functions available in a limited state or time period, such as an "injury treatment" function for tending to the raising character in a case where the raising character suffers an injury, a "wake up" function of waking the raising character who is sleeping, and a "put to bed" function for putting the awakened raising character to sleep.

### (Internal Display)

The fourth display mode is "internal display".

The internal display is a display mode specialized for presenting, to the user, not a change generated on the outer surface of the raising character but a change generated inside the body of the raising character. That is, the internal display is a display mode in which the raising character is positioned from a microscopic viewpoint. The internal display is not a display mode showing the appearance of the raising character but a display mode showing the inside of the body of the raising character. In the present embodiment, as illustrated in FIG. 3D, the internal display is configured to display cells existing in the body of the raising character.

In the raising game of the present embodiment, the raising character may suffer from not only an external injury but also a disease. The disease occurs with a state abnormality in the body of the raising character, and in the raising game, its treatment requires action on the cells of the raising character. Therefore, the functions available in the internal display include a "disease treatment" function for tending to the raising character in a case where the raising character suffers from a disease. Types of diseases such as viral diseases such as a cold and diseases caused by external injuries can be provided, and when the raising character is unwell, it is possible to provide an entertainment element that allows the user to adaptively determine whether "disease treatment" in the internal display, "injury treatment" in the character display, or both of them are required.

As described above, the four types of display modes include both the display mode showing the appearance of the character and the display mode not showing the appearance. Specifically, as illustrated in FIGS. 3A to 3D, the field display and the character display correspond to the display mode showing the appearance of the character, and the wide-area display and the internal display correspond to the display mode not showing the appearance of the character. As illustrated, the display mode showing the appearance of the character is configured to include both graphics (character image) related to the character and graphics (background image) related to the environment in which the character is arranged. On the other hand, the display mode not showing the appearance of the character is configured to include only graphics (planet image) related to the environment in which the character is arranged as in the wide-area display, or only graphics of elements (cells) constituting the character, although not showing the appearance of the character, as in the internal display. That is, the display mode not showing the appearance of the character is different from the display mode showing the appearance of the character in that the display mode is configured to include only one of the graphics related to the character or the graphics related to the environment in which the character is arranged.

These display modes are configured to be switchable by an operation input to the dial 131 as described above. Since the four types of display modes are modes in which the display elements are enlarged and shown in the order of wide-area display → field display → character display → internal display, the display modes are switched in the order by the rotation operation of the dial 131 in the clockwise direction 133. On the other hand, since the four types of display modes are modes in which the display elements are reduced and shown in the order of internal display → character display → field display → wide-area display, the display modes are switched in the order by the rotation operation of the dial 131 in the counterclockwise direction 134. In other words, the order of switching is determined in advance for a plurality of display modes, and the display mode is configured to be switched, depending on the direction of the rotation operation of the dial 131, between the switching of the display mode according to the forward direction of the order or the switching of the display mode according to the reverse direction.

### <Display Effect>

As described above, since the four types of display modes are provided for the discrete scale modes, when the display mode is switched, a display effect is presented so that the transition is smoothly shown.

Incidentally, as illustrated in FIG. 1, since the dial 131 is provided so as to protrude from the outer periphery of the game apparatus 100, for example, the dial may be erroneously operated when a finger hits the game apparatus or when the game apparatus is put into a pocket. In addition, since the raising game of the present embodiment is configured such that the available function changes depending on the display mode, there is a possibility that the number of operations required until the user uses the desired function increases due to the display mode being unintentionally switched by such an erroneous operation. Therefore, the display mode is configured to be switched on condition that the accumulation amount related to the dial operation exceeds a threshold, instead of being immediately switched when the dial operation is detected. That is, the dial operation is provided with a so-called "dead" zone, and is configured not to cause switching until the accumulation amount exceeds the threshold.

On the other hand, a state where no display change is shown until the accumulation amount related to the dial operation exceeds the threshold can give the user an impression that the game apparatus 100 is not suitably operated. That is, when the dial operation is invalidated until the accumulation amount reaches the threshold in order to avoid switching of the display mode due to erroneous operation, the display change does not occur even in case where the user intentionally operates the dial 131, so that an impression of poor responsiveness can be given and a suitable operational feeling cannot be provided.

Therefore, the display effect related to the switching of the display mode is configured in two stages. The display effect in the first stage is displayed in a state where the accumulation amount related to the dial operation does not exceed the threshold and the input state continues after the start of the dial operation is detected, that is, in a state where the dial operation is performed but the request for switching the display mode has not occurred yet (hereinafter, referred to as a first state). In addition, the display effect in the second stage is displayed in a state where the accumulation amount related to the dial operation exceeds the threshold after the start of the dial operation is detected, that is, in a state where the request for switching the display mode has actually occurred (hereinafter, the second state). These display effects differ in content as described later, and each is presented with display changes according to the input state of the dial operation. Hereinafter, the display effect displayed in the first state is referred to as "preliminary effect", and the display effect displayed in the second state is referred to as "switching effect". In addition, in the following description, a display mode of a screen before being switched by a dial operation, that is, a current display mode is referred to as a "first display mode", and a mode of a screen after switching due to the accumulation amount related to the dial operation exceeding the threshold is referred to as a "second display mode".

The preliminary effect and the switching effect differ in that the graphics displayed in the display effect are based on graphics constituting different display modes. More specifically, the preliminary effect and the switching effect differ in that in the preliminary effect, the display content is configured using the graphics in the first display mode, but in the switching effect, the display content is configured using the graphics in the second display mode. On the other hand, both display effects are basically common in that the graphics (character image, cell image) of the raising character or the graphics (planet image) in the environment where the raising character is arranged are positioned at the center of the display area of the display 110, accompanied by a display in which the graphics are enlarged or reduced.

### (Preliminary Effect)

The preliminary effect displayed when the switching from the first display mode to the second display mode is not confirmed is presented by changing the display size of the graphics constituting the first display mode according to the accumulation amount related to the dial operation. That is, the preliminary effect is presented by scaling the graphics in the first display mode according to the accumulation amount.

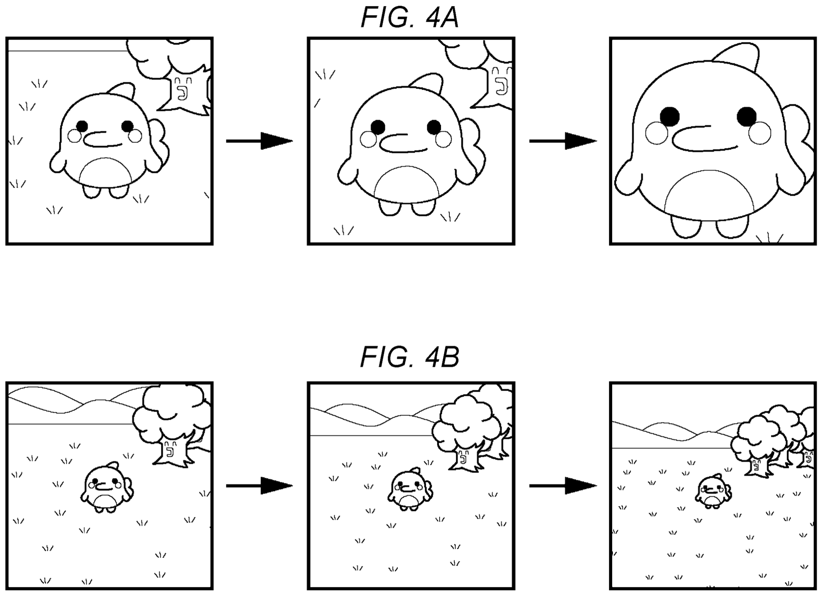

More specifically, in a case where the dial operation is an enlargement operation (the dial 131 is rotated in the clockwise direction 133), as illustrated in FIG. 4A, control is performed such that a screen is displayed in which the graphics constituting the first display mode are enlarged from a predetermined reference size for the first display mode to a display size corresponding to the accumulation amount. In addition, in a case where the dial operation is a reduction operation (the dial 131 is rotated in the counterclockwise direction 134), as illustrated in FIG. 4B, control is performed such that a screen is displayed in which the graphics constituting the first display mode are reduced from the reference size to the display size according to the accumulation amount.

As described above, by configuring to present the preliminary effect even before the switching of the display mode is confirmed, it is possible to indicate that the operation of the dial 131 by the user is detected as the operation input by the game apparatus 100. Further, the preliminary effect is configured such that the display content varies depending on whether the dial operation is the enlargement operation or the reduction operation. Therefore, even when the user forgets which direction the dial 131 is rotated to enlarge/reduce the display scale, the user can know the direction by the preliminary effect without waiting for the switching of the display mode.

### (Switching Effect)

On the other hand, when the switching from the first display mode to the second display mode is confirmed, the switching effect displayed instead of the preliminary effect is presented by changing the display size of the graphics constituting the second display mode. The switching effect is for connection without incongruity to transition the display transition from the display of the preliminary effect in a state where the accumulation amount related to the dial operation has reached the threshold to the screen of the second display mode, and is configured such that the display size of the graphics constituting the second display mode finally reaches a predetermined reference size for the second display mode. Therefore, in the switching effect, the display size of the graphics constituting the second display mode starts from a size different from the reference size. Here, the display size of the graphics at the start of the switching effect is changed depending on whether the dial operation that is the starting point of the switching is the enlargement operation or the reduction operation.

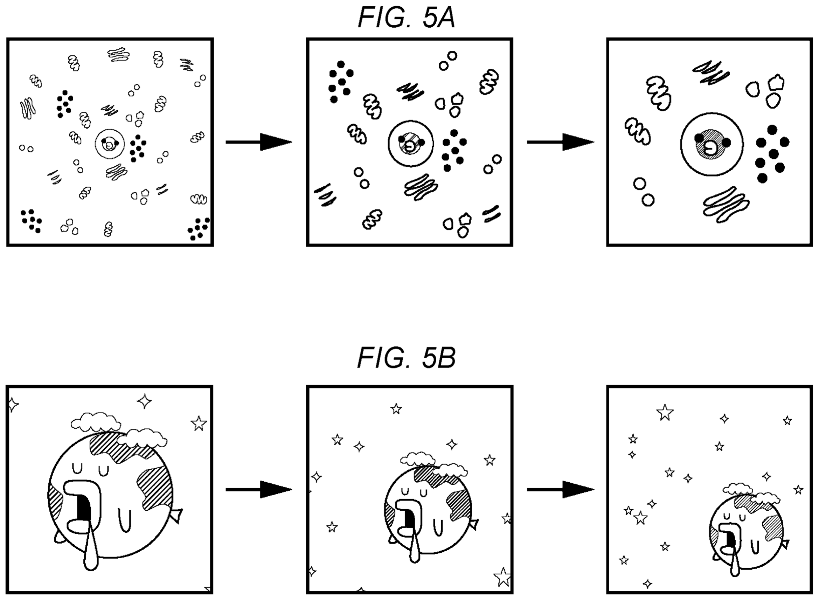

More specifically, in a case where the dial operation is the enlargement operation, as illustrated in FIG. 5A, the display size of the graphics constituting the second display mode at the start of the effect is set smaller than the reference size. That is, in the process of the switching effect, the graphics constituting the second display mode are displayed while the display size is increased stepwise. In addition, in a case where the dial operation is the reduction operation, as illustrated in FIG. 5B, the display size of the graphics constituting the second display mode at the start of the effect is set larger than the reference size. That is, in the process of the switching effect, the graphics constituting the second display mode are displayed while the display size is reduced stepwise.

As described above, by presenting two-stage display effect of the preliminary effect and the switching effect, it is possible to enhance the interest related to the switching of the display mode of the screen by the dial operation.

From the viewpoint of further enhancing the interest, in the display effect related to the switching of the display mode, the state change related to the switching may also be reflected in the graphics of the raising character. For example, in the raising game of the present embodiment, the character is treated for a disease by performing an operation that directly acts on cells in the body of the raising character. Therefore, at the time of switching from the character display to the internal display, the display effect may be presented with a change in the state of the graphics in which the raising character opens its mouth and behaves as if allowing the interior to be observed. That is, at the time of transition to the internal display, in the preliminary effect, the graphics of the raising character may be presented in a state with its mouth open, like a patient during a medical examination, allowing the viewpoint (camera) to advance into its interior. At this time, by changing the opening amount of the raising character according to the accumulation amount related to the dial operation, it is possible to present the preliminary effect with a high immersive feeling in conjunction with the dial operation. That is, by controlling the state change of the graphics such that the raising character opens its mouth wide as the accumulation amount increases, the area occupied by the mouth of the raising character on the screen increases according to the dial operation, thereby effectively depicting the viewpoint entering the interior of the raising character.

Note that, the raising game of the present embodiment is configured such that, as described above, the raising character is oviparous and remains in an egg state during the egg stage, and when hatching, obtains a character-like appearance and advances its growth stage to the baby stage. For this reason, in the egg stage, there is no raising character to display the inside of the body. Therefore, the switching from the character display to the internal display may be accepted on condition that the growth stage of the raising character is the baby stage or later. That is, even when the dial operation is performed in a state where the raising character is in the egg stage, the screen is controlled so as not to be switched to the internal display, and the above-described graphics state control for changing the opening amount is not performed.

In addition, the display effect is not limited to a case where the display mode is switched, and may be configured to be presented in a case where the dial operation is performed. That is, for example, even when the enlargement operation is performed in a state where the internal display is set, the display mode is already at the end in the forward direction of the switching order, and thus the display mode cannot be switched to the display mode of the content enlarged further. However, in order to provide a suitable operational feeling even in such a situation, display control is performed so as to present display effect. Since the display effect displayed at this time does not cause the switching by the dial operation, the display effect does not include the switching effect, and only the preliminary effect may be displayed. That is, in the display effect presented in a case where the enlargement operation is performed in the internal display, while the display size of the graphics (cell image) is changed (enlarged) according to the accumulation amount related to the dial operation (enlargement operation), the switching effect is not presented even when the accumulation amount exceeds the threshold, and the graphics in the internal display is continuously displayed.

Similarly, for example, even when the reduction operation is performed in a state where the wide-area display is set, the display mode is already at the end in the reverse direction of the switching order, and thus the display mode cannot be switched to the display mode of the content reduced further, but the display effect is presented in a form corresponding to the dial operation. In the display effect presented in a case where the reduction operation is performed in the wide-area display, while the display size of the graphics (planet image) is changed (reduced) according to the accumulation amount related to the dial operation (reduction operation), the switching effect is not presented even when the accumulation amount exceeds the threshold, and the graphics in the wide-area display is continuously displayed.

The presentation of the display effect based only on the preliminary effect is not limited to the wide-area display and the internal display which are the display modes at the end in the forward direction and the reverse direction of the switching order. As described above, in a case where the raising character is in the egg stage, the switching to the internal display is controlled to be disabled, and thus the character display is substantially in the last display mode. Therefore, in a case where the growth stage of the raising character is the egg stage, the display effect based only on the preliminary effect may be presented even when the dial operation for switching from the character display to the internal display is performed. More specifically, in a case where the enlargement operation is performed in the egg stage, the display effect of enlarging the display size of the graphics (egg image) constituting the character display from the reference size according to the accumulation amount related to the dial operation is presented on the display 110.

### (Midway Termination of Display Effect)

Note that the display effect related to the switching of the display mode may be configured to be able to be terminated midway without generating a switching request. As described above, the presentation of the display effect is started in response to the detection of the start of the dial operation, and in a case where the dial operation is ended, it is necessary to end the display effect so that the display effect can be presented at the time of the detection of the start of the next dial operation. Therefore, in a state where the accumulation amount related to the dial operation does not exceed the threshold, that is, the operation input to the dial 131 is terminated without reaching the second state (hereinafter, referred to as a third state), it is necessary to transition the state to a state where the graphics in the first display mode are displayed with the reference size. On the other hand, in the period in the first state, the preliminary effect is presented in a manner that the graphics in the first display mode are scaled according to the accumulation amount related to the dial operation, and thus, immediately changing the graphics in the first display mode to the reference size may give a sense of incongruity to the user. Therefore, in a case where the third state is reached, the display control is performed to cause the graphics in the first display mode to transition from the display size according to the accumulation amount to the reference size in a stepwise manner, so that the display effect is terminated midway.

Here, the third state is not limited to a state where the operation input to the dial 131 is not detected, and may be determined on the condition that a state where the dial 131 is not operated (a state where the accumulation amount does not change) is continued for a predetermined time.

### <Mode Display of Display Mode>

In the raising game of the present embodiment, the user can use various functions related to care for the raising character, by switching the four types of display modes associated with different scale modes. In order to allow the user to easily grasp a relationship between the scale mode and the display mode and the order of switching of the display mode, in a case where the display mode is switched, a mode display indicating which scale mode the current display mode corresponds to may be included in the screen.

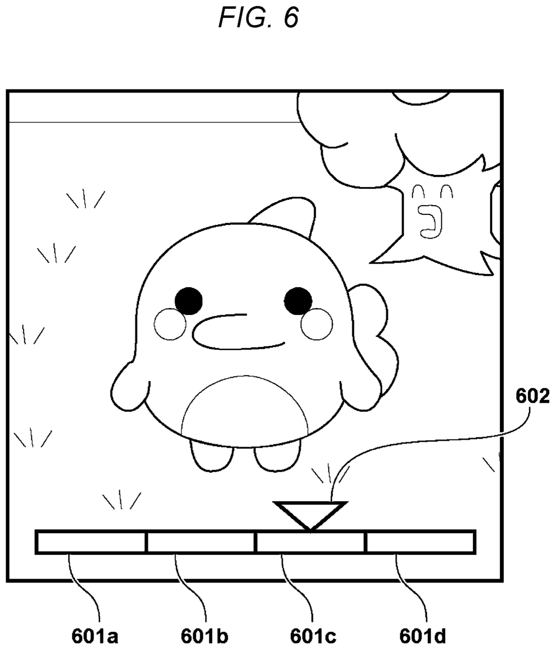

For example, as illustrated in FIG. 6, the mode display may include a plurality of display items 601 arranged at the lower part of the screen. In FIG. 6, the mode display includes four display items 601a to 601d, each of which is associated with a different scale mode. Specifically, the display item 601a is associated with wide-area display, the display item 601b is associated with field display, the display item 601c is associated with character display, and the display item 601d is associated with internal display.

In addition, the mode display includes an indication element 602 indicating a display item corresponding to the current display mode in the mode display. In the example of the drawing, the indication element 602 is composed of triangular-shaped graphics, and indicates that the display item 601 adjacent to the indication element 602 among the four display items 601 is the current display mode. In the present embodiment, it is described that the display item 601 corresponding to the current display mode can be identified by adding the indication element 602, but the manner of clearly indicating the display item 601 corresponding to the current display mode is not limited thereto. For example, instead of a triangular shape like the indication element 602, the display item 601 corresponding to the current display mode may be clearly indicated by displaying a frame surrounding the entire circumference of the corresponding display item 601. Alternatively, for example, in the mode display, the indication may be performed by displaying only the display item 601 corresponding to the current display mode in an opaque state and displaying the display item 601 corresponding to another display mode in a transparent state.

Here, since the display items 601a to 601d are arranged in accordance with the order of switching of the display mode, the user can grasp, through the mode display, whether or not there is a display mode of a display scale enlarged/reduced compared to the current display mode, and how large the scale of the current display mode is in the scale mode in the raising game. In the example of the drawing, the display items 601 are arranged in the horizontal direction, and the display item 601 on the right corresponds to a display mode in which the screen related to the raising character is further enlarged. Therefore, when the enlargement operation (the dial operation in the clockwise direction 133) is performed, the display position of the indication element 602 is changed so as to be adjacent to the display item 601 arranged one position to the right of that display item, instead of the display item 601 currently adjacent. On the other hand, when the reduction operation (the dial operation in the counterclockwise direction 134) is performed, the display position of the indication element 602 is changed so as to be adjacent to the display item 601 arranged one position to the left of that display item, instead of the display item 601 currently adjacent.

Note that, in order to secure the amount of information related to the raising game indicated by the screen, such a mode display may be controlled to be displayed only for a predetermined time after the display mode is switched.

### <Motion>

In order to represent that the character is a living entity living in the planet, a motion is set in at least some graphics included in the screen in each display mode. For example, in the wide-area display, the character display, and the internal display, each of the planet, the character, and the cell is included as graphics in the screen, but in a state where these remain stationary, it is difficult for the user to perceive them as living entities. For this reason, for example, a predetermined motion such as moving up and down is set, and the state of the graphics is sequentially changed in the screen according to the lapse of time. Here, in the raising game of the present embodiment, in order to give a sense of familiarity to the user, the planet is also presented by a character-like manner (different from the raising character) as illustrated in FIG. 3A. That is, the planet is configured to have a facial part in its appearance, be capable of wearing accessories, and have motions that can be set.

In addition, also in the field display, a motion is similarly set for some graphics arranged in the screen. In the field display, in addition to the raising character, for example, a wild character that the user has grown up to the friend stage in the past and left alone is arranged and displayed in the field. Therefore, a motion is set for each of the raising character and the wild character decided to be arranged in the field. The motion set to the character can include, for example, a motion that uses a gimmick (facility) arranged in the field, in addition to a motion that defines an action of a character alone, such as walking or jumping.

The setting of the motion to such various graphics may be decided, for example, at the time when switching to each display mode is confirmed (at the time when a switching request is generated).

Note that, when the switching of the display mode is generated, the motion set to each graphic is controlled to be interrupted, such that the display effect caused by the dial operation is emphasized. The interrupted motion may be controlled such that, thereafter, in a case where the dial operation reaches the third state and the first display mode is continuously displayed, the motion is resumed.

Incidentally, motions set to various characters particularly in the field display are configured with a change in display position so as to indicate that the characters move in the field. From the viewpoint of raising the character, it is assumed that the user pays attention to the raising character to be raised, and thus the screen is basically configured such that the raising character is positioned at the center in the field display. For this reason, for the field displayed as the field display, information such as display positions of various characters to be arranged and a progress state of motion is managed, and an entire image in which the entire field is drawn is stored in the display buffer of the memory 103. Then, by extracting, from the entire image, a rectangular area of a predetermined number of pixels in which the raising character is positioned at the center, a screen related to the field display is generated.

On the other hand, the functions available in the field display include a "focus" function for focusing on a specific facility in the field and observing the field, and the user can cause the screen to display an area independent of the position of the raising character in the entire image, and can observe, for example, that a wild character raised in the past uses the facility. That is, some functions can be configured to display a screen independent of the position of the raising character on the display 110, for example, in order to provide an entertainment element not limited to the growth of the raising character.

On the other hand, the operation related to the switching of the display mode received via the dial 131 is intended to change the scale mode of the screen related to the raising character and show the screen to the user. Thus, in a case where the start of the dial operation is detected, the display control is performed such that the raising character is located at the center of the display area even in a case where a screen not based on the position of the raising character is displayed on the display 110. In this way, as the display effect related to the switching of the display mode, the graphics related to the raising character can be suitably scaled and presented, and as a result, it is possible to provide a highly interesting play experience interlocked with the operation input to the dial 131.

Note that in the present embodiment, it is described that the display control is performed such that the raising character is arranged at the center of the display area at the time of switching the display mode, but the implementation of the present invention is not limited thereto. For example, in a case where the raising character is in the middle of the motion of using the facility, the display control may be performed such that the facility used by the raising character is arranged at the center instead of the raising character so that it is clear which facility is being used. In this case, in the display area of the display 110, the graphics of the facility are displayed at a fixed position, and the display position of the raising character is controlled on the basis of the facility by the motion using the facility. As a result, the graphics of the raising character may not be arranged at the center in the display area.

### <Function Change and Display Change Due to Progress of Game>

As described above, the raising game according to the present embodiment is configured such that the types of available functions are different for each display mode, and thus it is possible to improve both the interest of the user who voluntarily switches the display mode and the convenience related to the function selection. In order to further increase such an effect, the function available in each display mode and the screen configuration of each display mode may be changed according to the progress of the raising game.

In the raising game of the present embodiment, the planet is provided with fields having different types of attributes. In one aspect, the fields with different attributes can include flatlands, beaches, highlands. Each of these fields may be configured such that, in the background graphics displayed as the field, the area occupied by land, the area occupied by water, and the area occupied by sky are set to be high and distinguishable.

As described above, the raising game related to one raising character starts from hatching from an egg in the egg stage, and progresses through growth stages of the baby stage, the kids stage, the young stage, and the friend stage. Among these, it is assumed that the attribute of the raising character in and after the young stage is decided according to the care taken in the baby stage and the kids stage. Here, the attribute of the character may be provided, for example, in accordance with the attributes of a plurality of types of fields.

In order to enable a character with a desired attribute to be raised, in one aspect, the attribute of the field in which the raising character has been arranged in the baby stage and the kids stage may be involved in the decision of the attribute of the raising character. For example, in a raising period before the kids stage, a raising character arranged in a field at the seaside tends to grow into a character having an attribute corresponding to the seaside after the young stage. Therefore, the functions available in the field display include a "field movement" function. By using the "field movement" function, the user can change the field in which the raising character is arranged.

In order to express the concept of the ecosystem of the character in the raising game, the raising game of the present embodiment is configured such that the character whose attribute has been decided inhabits the field corresponding to the attribute. Therefore, the "field movement" function in the field display may be configured to be available only in a case where the growth stage of the raising character is the baby stage or the kids stage, and may be controlled to be unavailable in a case where the growth stage is the young stage or later. Here, the configuration that the function is unavailable may be realized by not displaying an option of the corresponding function, or may be realized by performing control such that the option of the corresponding function is displayed but the function is not called even if the option is selected.

Similarly, the "independence" function of allowing the raising character grown up to the friend stage to stand on its own may be configured to be available only in a case where the growth stage of the raising character is the friend stage. Note that the raising character that is allowed to stand on its own by the "independence" function can be arranged as a wild character in the field in the raising game as described above. Here, since the character raised to the friend stage has its attribute decided, the wild character is controlled to be arranged in the field corresponding to the attribute of the character. In other words, in the field display, the wild character arranged in the field is a character having an attribute corresponding to the current field among the characters raised to stand on its own by the user in the past. Which wild character is to be arranged in the field displayed in the field display may be determined, at the time of the display, by deciding a maximum predetermined number of characters from among the wild characters, which have the attribute corresponding to the attribute of the field, managed as the wild character. With such a configuration, it is possible to form the atmosphere of the field of each attribute, to cause the user to grasp the tendency of the ecosystem of the field, and to give a hint for raising a character having a desired attribute.

In addition, the appearance of the planet in the wide-area display can be configured to change according to the item achieved in the raising game. For example, in a case where the user has raised a large number of characters having an attribute corresponding to the flatland to the friend stage, the appearance of the planet may be configured to change to a state in which the land has developed (increase in forest area, increase in green, or the like), or the like.

In addition, the raising game is configured such that the time in the game also progresses on the basis of the time information set in the game apparatus 100. That is, in the raising game, a flow of time in which a time period transitions from morning → daytime → evening → night → morning →... in the real world is presented in a simulated manner also in the game. Therefore, in the field display or the character display, the state of the background graphics is changed (change in brightness, color, and the like) according to the time period and is reflected on the screen. In addition, as for the raising character, the state of the graphics is changed according to the time period and reflected on the screen, such that the character actively acts during the day, stepwise reduces activity in the evening, feels sleepy and goes to bed at night, and wakes up in the morning.

In providing such an entertainment element related to the lapse of time, for example, among the functions available in the character display, the "wake up" function may be controlled to be available only in a predetermined period in which the time period in the game transitions from night to morning, and may be controlled to be unavailable in other time periods. Similarly, the "put to bed" function may be controlled to be available only in a predetermined period in which the time period in the game transitions from the evening to the night, and may be controlled to be unavailable in other time periods.

Note that such a change in the state of the graphics according to the time period in the game is not necessarily limited to the display mode showing the appearance of the raising character. For example, even in the wide-area display, by changing the state of the graphics of the planet according to the time period (such as the planet going to sleep), it is possible to inform the user of what kind of care is currently available in the time period in the current raising game without checking the appearance of the raising character.

The game apparatus 100 according to the present embodiment is configured to transition to a sleep state (standby state) in order to save a battery, in a state where a non-operation time continues for a predetermined time or the like. The sleep state is configured to be released when an arbitrary operation input is made, and the game apparatus 100 returns to a state where game play can be performed again. In the raising game of the present embodiment, it is assumed that the wide-area display is selected as the display mode at the time of return. Therefore, by changing the state of the graphics according to the time period in the wide-area display, it is possible to indirectly indicate the state of the raising character to the user, and to inform the user of what kind of operation (care) is to be performed after the game apparatus 100 returns.

As described above, in the raising game of the present embodiment, the wide-area display is frequently presented to the user, and it is preferable that the progress of the raising game can be easily grasped. Therefore, the wide-area display displayed at the time of returning from the standby state may include time display in an initial state. The time display may be displayed in a period until any operation input is detected, and may be controlled to be hidden by detection of the operation input. Note that the time display may be controlled to be displayed again when a non-operation period such as 10 seconds occurs after the time display is hidden.

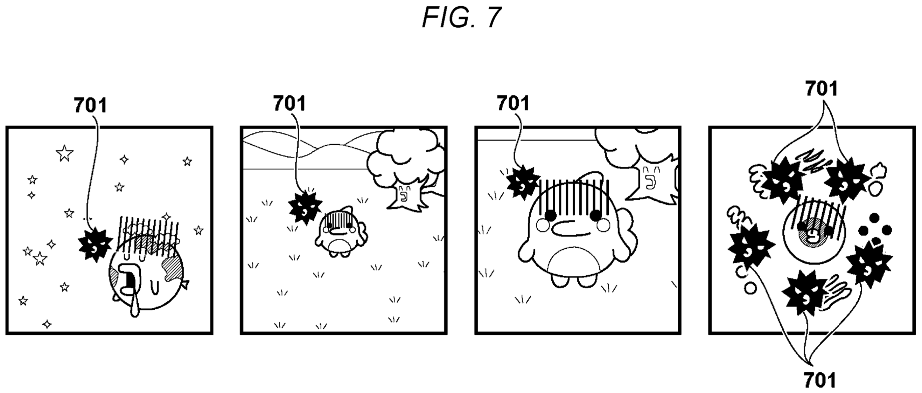

In addition, in a case where the raising character is in the state requiring treatment of the user due to injury, disease, or the like, a state display for notifying the state is displayed on the screen. More specifically, the state display is displayed in a case where the health state of the raising character is in a partial state where predetermined care by the user is required for improving the state such as injury, disease, or near-death. The state display is also displayed on the screen in any display mode as illustrated in FIG. 7, for example, in order to inform the user of the health state of the raising character. In the illustrated aspect, the state display is shown by an icon 701. The icon 701 is prepared for each health state, and the icon of the corresponding health state is selected and displayed.

Incidentally, in a health state where the raising character is in a state of reduced activity, such as being near death, it is unnatural for the raising character to perform an action of opening its mouth by itself in the display effect at the time of switching from the character display to the internal display. Therefore, in a health state where it is not appropriate to open its mouth by itself, such as a case where the raising character is in a predetermined health state, the display effect at the time of switching to the internal display may be performed without including the raising character's mouth-opening effect.

### <<Switching Processing>>

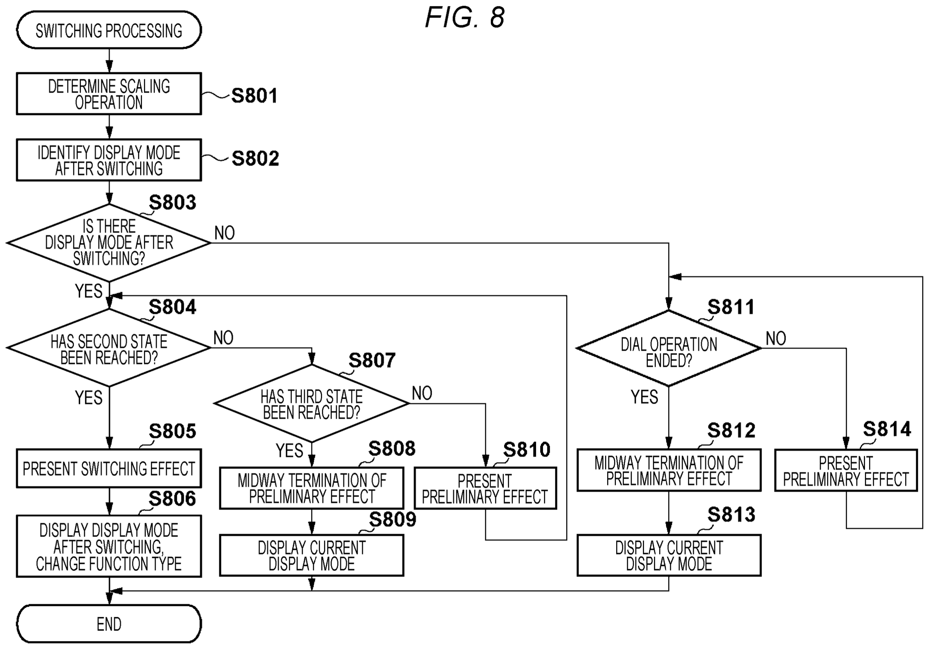

Specific processing of the switching processing executed according to the switching of the display mode in the game apparatus 100 of the present embodiment having such a configuration will be described with reference to the flowchart of FIG. 8. The processing corresponding to the flowchart can be implemented by the control unit 101, for example, reading a corresponding processing program stored in the storage apparatus 102, loading the processing program in the memory 103, and executing the processing program. Note that the present switching processing will be described as being started, for example, when the start of the operation input to the dial 131 is detected.

In step S801, the control unit 101 determines whether the operation input to the dial 131 is the enlargement operation or the reduction operation. On the basis of the control signal output from the operation I/F 105, the control unit 101 identifies whether the operation input made to the dial 131 is a rotation operation in the clockwise direction 133 or the counterclockwise direction 134, and performs the determination of this step.

In S802, on the basis of the determination result in S801, the control unit 101 identifies the display mode (second display mode) after switching in which the display mode is switched by the detected dial operation. At this time, in a case where the current display mode (first display mode) is the display mode at the end of the display mode switching order, the control unit 101 identifies that there is no display mode after switching.

In S803, the control unit 101 determines whether or not there is a display mode after switching. In a case where it is determined that there is a display mode after switching, the control unit 101 advances processing to S804, and in a case where it is determined that there is no display mode after switching, the control unit 101 advances processing to S811.

In step S804, the control unit 101 determines whether or not the dial operation has reached the second state. That is, the control unit 101 determines whether or not the accumulation amount related to the dial operation exceeds the threshold. In a case where it is determined that the dial operation has reached the second state, the control unit 101 advances processing to S805, and in a case where it is determined that the dial operation has not reached the second state, the control unit 101 advances processing to S807.

In S805, under the control of the control unit 101, the display control apparatus 104 causes the display 110 to display the switching effect related to the display mode after switching, and the processing proceeds to S806.

In S806, under the control of the control unit 101, the display control apparatus 104 forms a screen in the display mode after switching and causes the display 110 to display the screen. In addition, the control unit 101 executes processing of changing the available function to the function defined for the display mode after switching, and completes this switching processing. That is, by the processing of this step, the screen displayed on the display 110 is fixed to the screen of the display mode after switching, and the type of function available to the user, for example from the menu screen or the like is also changed to the function associated with the display mode after switching.

On the other hand, in a case where it is determined in S804 that the dial operation has not reached the second state, in S807, the control unit 101 determines whether the dial operation has reached the third state. That is, the control unit 101 determines whether or not the accumulation amount related to the dial operation has ended without exceeding the threshold. In a case where it is determined that the dial operation has reached the third state, the control unit 101 advances processing to S808, and in a case where it is determined that the dial operation has not reached the third state, the control unit 101 advances processing to S810.

In step S808, under the control of the control unit 101, the display control apparatus 104 performs display control to terminate midway the preliminary effect related to the current display mode. That is, the display control apparatus 104 performs display control to cause the graphics in the current display mode changed by the preliminary effect to transition to the reference size in a stepwise manner, and the processing proceeds to S809.

In step S809, under the control of the control unit 101, the display control apparatus 104 forms a screen in the current display mode, causes the display 110 to display the screen, and completes this switching processing.

On the other hand, in a case where it is determined in S807 that the dial operation has not reached the third state, under the control of the control unit 101, in S810, the display control apparatus 104 causes the display 110 to display the preliminary effect related to the current display mode, and the processing returns to S804. In the preliminary effect displayed in this step, the graphics in the current display mode are scaled from the reference size according to the accumulation amount related to the dial operation.

On the other hand, in a case where it is determined in S803 that there is no display mode after switching, in S811, the control unit 101 determines whether or not the dial operation has ended. In a case where it is determined that the dial operation has ended, the control unit 101 advances processing to S812, and in a case where it is determined that the dial operation has not ended, the control unit 101 advances processing to S814.

In step S812, under the control of the control unit 101, the display control apparatus 104 performs display control to terminate midway the preliminary effect related to the current display mode. That is, the display control apparatus 104 performs display control to cause the graphics in the current display mode changed by the preliminary effect to transition to the reference size in a stepwise manner, and the processing proceeds to S813.

In step S813, under the control of the control unit 101, the display control apparatus 104 forms a screen in the current display mode, causes the display 110 to display the screen, and completes this switching processing.

On the other hand, in a case where it is determined in S811 that the dial operation has not ended, under the control of the control unit 101, in S814, the display control apparatus 104 causes the display 110 to display the preliminary effect related to the current display mode, and the processing returns to S811.

As described above, according to the game apparatus of the present embodiment, convenience can be improved.

Note that in the present embodiment, it has been described that the threshold of the accumulation amount related to whether or not to switch the display mode is the same, but the implementation of the present invention is not limited thereto. The threshold may be changed for switching between some display modes. For example, in the field display and the character display, partially common graphics (the raising character and the background) are loaded in a memory for generating a screen, but in the wide-area display or the internal display, the graphics loaded in the memory are different from those in the field display and the character display. Therefore, in consideration of the time required to read the graphics, the threshold for switching between the field display and the wide-area display and between the character display and the internal display may be set to be relatively larger than the threshold set between the field display and the character display.

### [Modification 1]

In the above-described embodiment, it has been described that the wide-area display is selected when the game apparatus 100 returns from the sleep state, but the implementation of the present invention is not limited thereto. For example, in a situation such as a case where urgent treatment is required, the user needs to perform the dial operation related to switching of the display mode a plurality of times until switching from the wide-area display to the character display or the internal display, and during that time, the disease of the raising character progresses, which may be disadvantageous for the user. In addition, in a case where the user is in childhood or the like, there is a possibility that, in a state where some treatment by the user is necessary, the user cannot intuitively identify the display mode (character display or internal display) in which the operation related to the function use is to be performed by switching.

Therefore, in a case where the raising character is in a predetermined state, the game apparatus 100 may be configured to return from the sleep state in a state where the display mode is switched to a display mode in which a function necessary for resolving the state can be used. For example, in a case where the raising character is in a health state requiring disease treatment, a screen of the internal display different from wide-area display may be configured to be displayed after returning. That is, in a case where the game apparatus 100 is returned from the sleep state, the display control apparatus 104 causes the display 110 to display a screen in a display mode corresponding to the state of the raising character.

With such a configuration, when the game apparatus 100 is returned from the sleep state, the display mode capable of using the function capable of changing the state of the raising character is automatically selected and displayed, so that it is possible to provide a young user or the like with game content that is easy to play.

### [Modification 2]

In the embodiments and the modification described above, the aspect of switching the display mode according to the operation input to the dial 131 including the rotatable rotation mechanism has been described, but the embodiment of the present invention is not limited thereto. The operation member that receives the operation input related to switching of the display mode may be any operation member as long as the operation member is configured to be able to detect a state where the operation input is continuously performed, accumulate and hold the amount of the operation input performed for the continuous state, and output a value corresponding to the accumulation amount. In one aspect, the operation member may be a button configured to be capable of a long press operation configured to increase the accumulation amount for a period in the pressed state. Alternatively, the operation member may be implemented in such a manner that the operation member and the operation I/F 105 configured to be able to detect the operation input to the operation member are configured to be able to accumulate and hold information regarding the number of operation inputs detected in a predetermined period after the first operation input, and to sequentially output, as the accumulation amount, the information regarding the cumulative number of operation inputs.

### [Other Embodiments]

The invention is not limited to the above-described embodiments, and various modifications and changes can be made within the scope of the gist of the invention.

### [Summary of Embodiments]

The above-described embodiments disclose at least the following game apparatus and program.
(1) A game apparatus that executes a game in which a character appears, the game apparatus including:
   an execution unit that executes the game;
   a display control unit that causes a display unit to display the character; and
   an operation input unit that receives an operation input for the game, in which
   the operation input unit is capable of receiving at least a first operation input related to switching of a display mode of a display element related to the character and a second operation input related to selection of a game element acting on the character, and
   on condition that the first operation input is received,
   the display control unit switches and displays a display mode of the display element, and
   the execution unit changes a type of the game element selectable by the second operation input.
(2) The game apparatus according to (1), in which
   the display mode of the display element includes a plurality of display modes, and
   on condition that the first operation input is received, the display control unit switches the display mode to a display mode different from a current display mode of the display element among the plurality of display modes.
(3) The game apparatus according to (2), in which
   each of the plurality of display modes displays, in a different scale mode, at least one of the character or an environment in which the character is arranged.
(4) The game apparatus according to (3), in which
   the display control unit causes
   the display element of the display mode to be displayed while a display size is reduced stepwise, in a case of switching to a display mode corresponding to a smaller scale mode, and
   the display element of the display mode to be displayed while the display size is increased stepwise, in a case of switching to a display mode corresponding to a larger scale mode.
(5) The game apparatus according to (2) or (3), in which on condition that the display mode of the display element is switched, the display control unit further causes the display unit to display a mode display indicating which display mode among the plurality of display modes.
(6) The game apparatus according to (5), in which
   the mode display includes a display item corresponding to each of the plurality of display modes, and
   the display control unit displays the display item corresponding to each of the plurality of display modes in a manner capable of identifying a display item corresponding to the current display mode of the display element.
(7) The game apparatus according to (6), in which
   the display mode of the display element is configured to be switchable in an order determined on the basis of a corresponding scale mode, and
   the mode display is configured by arranging display items respectively corresponding to the plurality of display modes in the order.
(8) The game apparatus according to any one of (5) to (7), in which the display control unit ends display of the mode display on condition that the display has been performed for a predetermined time.
(9) The game apparatus according to any one of (3) to (8), in which the plurality of display modes include a display mode showing an appearance of the character and a display mode not indicating the appearance of the character.
(10) The game apparatus according to (9), in which the display mode showing the appearance of the character includes the character and the environment in which the character is arranged.
(11) The game apparatus according to (10), in which in a case where the display element is displayed in the display mode showing the appearance of the character, the game element selectable by the second operation input includes an environment changing element related to a change of the environment in which the character is arranged.
(12) The game apparatus according to (11), in which on condition that a growth stage of the character has not grown to a predetermined stage, the execution unit includes the environment changing element in the game element selectable by the second operation input.
(13) The game apparatus according to (12), in which
   on condition that the growth stage of the character has grown beyond the predetermined stage,
   the display control unit fixes the environment in which the character is arranged to an environment corresponding to attribute information of the character, and
   the execution unit does not include the environment changing element in the game element selectable by the second operation input.
(14) The game apparatus according to any one of (9) to (13), in which in the display mode not showing the appearance, an appearance of the environment in which the character is arranged varies depending on evaluation regarding a progress of the game.
(15) The game apparatus according to any one of (2) to (14), in which
   the game progresses while a time period in the game changes,
   the display control unit changes the display element to a state where a time period in the game is reflected, in some of the plurality of display modes, and
   in a case where the display element is displayed in a display mode in which the time period in the game is reflected, the execution unit further changes the type of the game element selectable by the second operation input according to the time period.
(16) The game apparatus according to any one of (2) to (15), in which in a case where the game apparatus returns from a standby state, the display control unit causes the display element to be displayed in a predetermined display mode among the plurality of display modes.
(17) The game apparatus according to (16), in which on condition that a state of the character is a predetermined state, in a case where the game apparatus returns from the standby state, the display control unit causes the display element to be displayed in a display mode different from the predetermined display mode among the plurality of display modes.
(18) The game apparatus according to (2), in which in a case where the game apparatus returns from a standby state, the display control unit causes the display element to be displayed in a display mode corresponding to a state of the character.
(19) The game apparatus according to (18), in which on condition that the state of the character is a predetermined state, in a case where the game apparatus returns from the standby state, the display control unit causes the display element to be displayed in a display mode in which the game element for changing the state of the character is selectable by the second operation input.
(20) The game apparatus according to any one of (1) to (19), in which switching of the display mode of the display element is performed without changing a state of the character in the game.
(21) The game apparatus according to (20), in which the state of the character includes at least one of an environment in which the character is arranged in the game or a health state of the character.
(22) The game apparatus according to (21), in which the display control unit further causes the display unit to display a state display indicating the health state of the character.
(23) The game apparatus according to (22), in which the display control unit causes the state display to be displayed on condition that the health state of the character is a predetermined health state.
(24) The game apparatus according to (23), in which the display control unit causes the state display to be displayed regardless of a display mode of the display element.
(25) A program for causing a computer to function as each unit of a game apparatus according to any one of (1) to (24).

## Claims

1. A game apparatus that executes a game in which a character appears, the game apparatus comprising:
an execution unit that executes the game;
a display control unit that causes a display unit to display the character; and
an operation input unit that receives an operation input for the game, wherein
the operation input unit is capable of receiving at least a first operation input related to switching of a display mode of a display element related to the character and a second operation input related to selection of a game element acting on the character, and
on condition that the first operation input is received,
the display control unit switches and displays a display mode of the display element, and
the execution unit changes a type of the game element selectable by the second operation input.

2. The game apparatus according to claim 1, wherein
the display mode of the display element includes a plurality of display modes, and
on condition that the first operation input is received, the display control unit switches the display mode to a display mode different from a current display mode of the display element among the plurality of display modes.

3. The game apparatus according to claim 2, wherein
each of the plurality of display modes displays, in a different scale mode, at least one of the character or an environment in which the character is arranged.

4. The game apparatus according to claim 3, wherein
the display control unit causes
the display element of the display mode to be displayed while a display size is reduced stepwise, in a case of switching to a display mode corresponding to a smaller scale mode, and
the display element of the display mode to be displayed while the display size is increased stepwise, in a case of switching to a display mode corresponding to a larger scale mode.

5. The game apparatus according to claim 2, wherein
on condition that the display mode of the display element is switched, the display control unit further causes the display unit to display a mode display indicating which display mode among the plurality of display modes.

6. The game apparatus according to claim 5, wherein
the mode display includes a display item corresponding to each of the plurality of display modes, and
the display control unit displays the display item corresponding to each of the plurality of display modes in a manner capable of identifying a display item corresponding to the current display mode of the display element,
the display mode of the display element is configured to be switchable in an order determined on a basis of a corresponding scale mode, and
the mode display is configured by arranging display items respectively corresponding to the plurality of display modes in the order,
the display control unit ends display of the mode display on condition that the display has been performed for a predetermined time.

7. The game apparatus according to claim 3, wherein
the plurality of display modes include a display mode showing an appearance of the character and a display mode not indicating the appearance of the character,
the display mode showing the appearance of the character includes the character and the environment in which the character is arranged,
in a case where the display element is displayed in the display mode showing the appearance of the character, the game element selectable by the second operation input includes an environment changing element related to a change of the environment in which the character is arranged.

8. The game apparatus according to claim 7, wherein
on condition that a growth stage of the character has not grown to a predetermined stage, the execution unit includes the environment changing element in the game element selectable by the second operation input,
on condition that the growth stage of the character has grown beyond the predetermined stage,
the display control unit fixes the environment in which the character is arranged to an environment corresponding to attribute information of the character, and
the execution unit does not include the environment changing element in the game element selectable by the second operation input.

9. The game apparatus according to claim 8, wherein
in the display mode not showing the appearance, an appearance of the environment in which the character is arranged varies depending on evaluation regarding a progress of the game.

10. The game apparatus according to claim 2, wherein
the game progresses while a time period in the game changes,
the display control unit changes the display element to a state where a time period in the game is reflected, in some of the plurality of display modes, and
in a case where the display element is displayed in a display mode in which the time period in the game is reflected, the execution unit further changes the type of the game element selectable by the second operation input according to the time period.

11. The game apparatus according to claim 2, wherein
in a case where the game apparatus returns from a standby state, the display control unit causes the display element to be displayed in a predetermined display mode among the plurality of display modes, and
on condition that a state of the character is a predetermined state, in a case where the game apparatus returns from the standby state, the display control unit causes the display element to be displayed in a display mode different from the predetermined display mode among the plurality of display modes.

12. The game apparatus according to claim 2, wherein
in a case where the game apparatus returns from a standby state, the display control unit causes the display element to be displayed in a display mode corresponding to a state of the character,
on condition that the state of the character is a predetermined state, in a case where the game apparatus returns from the standby state, the display control unit causes the display element to be displayed in a display mode in which the game element for changing the state of the character is selectable by the second operation input.

13. The game apparatus according to claim 1, wherein
switching of the display mode of the display element is performed without changing a state of the character in the game,
the state of the character includes at least one of an environment in which the character is arranged in the game or a health state of the character,
the display control unit further causes the display unit to display a state display indicating the health state of the character.
the display control unit causes the state display to be displayed on condition that the health state of the character is a predetermined health state.

14. The game apparatus according to claim 13, wherein
the display control unit causes the state display to be displayed regardless of the display mode of the display element.

15. A program for causing a computer to function as each unit of a game apparatus according to any one of claims 1 to 14.
